(19) **Europäisches Patentamt / European Patent Office / Office européen des brevets**

(11) **EP 4 463 314 B1**

(12) **FASCICULE DE BREVET EUROPEEN**

(45) Date de publication et mention de la délivrance du brevet:
**26.11.2025   Bulletin 2025/48**

(21) Numéro de dépôt: **23703261.0**

(22) Date de dépôt: **05.01.2023**

(51) Classification Internationale des Brevets (IPC):
**B29C 35/02** *(2006.01)*   **B29D 24/00** *(2006.01)*
**B29C 70/56** *(2006.01)*   **B29C 70/86** *(2006.01)*
**B29C 70/38** *(2006.01)*   *B29C 35/08* *(2006.01)*

(52) Classification Coopérative des Brevets (CPC):
**B29D 24/005; B29C 35/0266; B29C 70/382; B29C 70/386; B29C 70/56; B29C 70/86; B29D 24/004;** B29C 2035/0838

(86) Numéro de dépôt international:
**PCT/FR2023/050010**

(87) Numéro de publication internationale:
**WO 2023/135381 (20.07.2023 Gazette 2023/29)**

(54) **DRAPAGE D'UNE PEAU EN MATERIAU THERMOPLASTIQUE SUR UN CORPS MULTICELLULAIRE**

DRAPIEREN EINER HAUT AUS THERMOPLASTISCHEM MATERIAL AUF EINEM MEHRZELLIGEN KÖRPER

DRAPING A SKIN OF THERMOPLASTIC MATERIAL ON A MULTICELLULAR BODY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.01.2022   FR 2200250**

(43) Date de publication de la demande:
**20.11.2024   Bulletin 2024/47**

(73) Titulaire: **SAFRAN**
**75015 Paris (FR)**

(72) Inventeurs:
• **DE FRANCQUEVILLE, Foucault**
**77550 MOISSY-CRAMAYEL (FR)**
• **MERCIER, Rémi, Roland, Robert**
**77550 MOISSY-CRAMAYEL (FR)**
• **BEN SALEM, Naoufel**
**77550 MOISSY-CRAMAYEL (FR)**

(74) Mandataire: **Cabinet Beau de Loménie**
**103, rue de Grenelle**
**75340 Paris Cedex 07 (FR)**

(56) Documents cités:
**US-A1- 2018 018 952**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

**Domaine Technique**

La présente invention se rapporte au domaine général des procédés de drapage par placement automatique de fibres, notamment pour la fabrication de panneaux d'atténuation acoustique.

**Technique antérieure**

Les panneaux d'atténuation acoustique sont typiquement constitués d'une peau acoustique perméable aux ondes acoustiques que l'on souhaite atténuer, d'une peau pleine réfléchissante dite « peau de fermeture » et d'un corps multicellulaire disposé entre ces deux peaux. Le corps cellulaire peut prendre la forme d'une pluralité de cloisons définissant des cellules, par exemple selon une forme de nid d'abeille. De façon bien connue, de tels panneaux forment des résonateurs de type Helmholtz qui permettent d'atténuer les ondes acoustiques dans une certaine gamme de fréquences. Des panneaux d'atténuation acoustique de ce type sont notamment décrits dans les documents US 5 912 442 et GB 2 314 526.

Il est connu de réaliser la ou les peaux d'un tel panneau acoustique par drapage de structures fibreuses imprégnées sur le corps multicellulaire, grâce à la technique de placement automatique de fibres, aussi connue sous le nom « AFP » pour « Automated Fiber Placement » en anglais. En particulier, lorsque les structures fibreuses sont imprégnées par un matériau thermoplastique et que le corps multicellulaire est également réalisé en matériau thermoplastique, cette technique permet de créer dès le dépôt un lien fort entre le corps multicellulaire et les structures fibreuses. En effet, la pression de compactage associée à une montée en température à l'endroit du contact entre le corps multicellulaire et les structures fibreuses permet de créer une liaison solide, conforme aux exigences aéronautiques. Un tel procédé de drapage sur corps multicellulaire est par exemple décrit dans le document US 2018/0018952.

Toutefois, si la technique de placement automatique de fibres est particulièrement adaptée au drapage de structures fibreuses sur des surfaces lisses et continues, sa mise en œuvre sur des surfaces discontinues est plus délicate. Ainsi, lorsque l'on drape les structures fibreuses sur le corps multicellulaire pour former une peau, on constate des affaissements de ladite peau dans les zones situées au-dessus des « vides », c'est-à-dire dans les zones les plus éloignées des cloisons du corps multicellulaire. Ce phénomène, appelé « telegraphing », réduit l'aérodynamisme du panneau ainsi fabriqué et diminue sa tenue mécanique.

**Exposé de l'invention**

La présente invention a pour but principal de permettre la fabrication de panneaux multicellulaires comprenant au moins une peau en remédiant aux inconvénients précités.

A cet effet, l'invention propose un procédé de fabrication d'un panneau comprenant une pluralité de cloisons définissant des cellules recouvertes par au moins une peau en matériau thermoplastique, la peau étant réalisée par drapage de structures fibreuses imprégnées d'un matériau thermoplastique sur les bords supérieurs des cloisons par placement automatique de fibres, les bords supérieurs des cloisons et les structures fibreuses étant solidarisés à l'aide d'un dispositif de chauffage localisé au moment de leur mise en contact, le procédé étant caractérisé en ce que les structures fibreuses sont drapées avec une tension de drapage sur l'interface entre chaque bord de cloison et la structure fibreuse déposée appliquant une contrainte de cisaillement comprise entre 50% et 80% de la contrainte de cisaillement maximale avant rupture de ladite interface.

Ainsi, l'invention permet d'appliquer une tension suffisamment importante sur les structures fibreuses au moment du drapage pour les tendre d'une cloison à l'autre de manière satisfaisante, tout en limitant les risques de rompre la liaison entre les structures fibreuses et la pluralité de cloisons. Ainsi, on réduit les affaissements de la peau dans les espaces entre les cloisons en conservant une liaison forte entre le corps multicellulaire et ladite peau. La tenue mécanique du panneau final est donc améliorée, et ses propriétés aérodynamiques augmentées.

Le terme « solidarisés » peut être remplacé par « soudés » dans le cas où les bords supérieurs des cloisons sont réalisés en matériau thermoplastique.

On comprend bien que les bords supérieurs des cloisons définissent une surface de drapage continue sur laquelle les structures fibreuses sont drapées. Ainsi, de préférence, les structures fibreuses drapées recouvrent à la fois les bords supérieurs des cloisons et les espaces appartenant aux cellules situés entre les bords supérieurs des cloisons.

Selon un mode particulier de réalisation de l'invention, la tension de drapage est réalisée au moins en partie par des galets tendeurs contrôlés en rotation.

Selon un autre mode particulier de réalisation de l'invention, la tension de drapage est réalisée au moins en partie par un rouleau de dépôt des structures fibreuses contrôlé en rotation.

Selon un autre mode particulier de réalisation de l'invention, les structures fibreuses sont drapées avec une pression de compactage appliquée par un élément d'application de la pression sur le ou les bords supérieurs des cloisons à un instant donné correspondant à entre 60% et 85% de la pression maximale supportée par le bord supérieur d'une cloison multipliée par le nombre de cloisons recouvertes par ledit élément d'application à l'instant donné.

L'élément d'application de la pression peut être un rouleau de dépôt ou un sabot de compactage.

La pression de compactage exercée par le ou les éléments d'application à un instant donné est ainsi adaptée selon le nombre de cloisons situées sous ledit élément d'application à l'instant donné. Par conséquent, la pression de compactage est suffisante à chaque instant pour permettre de créer une interface solide entre les structures fibreuses déposées et le ou les bords supérieurs des cloisons, sans être excessive dans les zones où l'espace entre les cloisons est important. On limite ainsi encore le risque de « telegraphing », la pression de compactage exercée sur les espaces « creux » entre les cloisons étant diminuée.

Selon un autre mode particulier de réalisation de l'invention, un capteur mesure le nombre de cloisons recouvertes par l'élément d'application.

Selon un autre mode particulier de réalisation de l'invention, l'élément d'application est contrôlé par un dispositif adaptant la pression de compactage appliquée par l'élément d'application selon la position de l'élément d'application et le motif géométrique global formé par les bords supérieurs de la pluralité de cloisons.

Selon un autre mode particulier de réalisation de l'invention, au moins les bords supérieurs des cloisons sont réalisés en matériau thermoplastique.

Ainsi, la liaison entre le corps multicellulaire et les structures fibreuses est réalisée en soudant deux matériaux thermoplastiques : la liaison est donc très robuste.

L'invention propose également une installation pour le drapage de structures fibreuses imprégnées d'un matériau thermoplastique sur les bords supérieurs d'une pluralité de cloisons définissant des cellules, l'installation comprenant au moins :

- un dispositif d'alimentation en structures fibreuses imprégnées par un matériau thermoplastique,
- un dispositif de dépôt des structures fibreuses sur les bords supérieurs de la pluralité de cloisons,
- un dispositif de chauffage localisé pour chauffer les portions des bords supérieurs des cloisons et les portions des structures fibreuses immédiatement avant leur mise en contact par le dispositif de dépôt,

l'installation étant caractérisée en ce que le dispositif de dépôt est configuré pour réaliser une tension de drapage sur l'interface entre chaque bord de cloison et la structure fibreuse déposée appliquant une contrainte de cisaillement comprise entre 50% et 80% de la contrainte de cisaillement maximale avant rupture de ladite interface.

Selon un mode particulier de réalisation de l'invention, le dispositif de dépôt comprend au moins un élément d'application de la pression contrôlé d'une part en rotation pour réaliser la tension de drapage, et contrôlé d'autre part en translation pour réaliser une pression de compactage sur le ou les bords supérieurs des cloisons à un instant donné correspondant à entre 60% et 85% de la pression maximale supportée par le bord supérieur d'une cloison multipliée par le nombre de cloisons recouvertes par ledit élément d'application à l'instant donné.

Selon un mode particulier de réalisation de l'invention, le ou les éléments d'application de la pression sont contrôlés par un dispositif de contrôle déterminant la pression de compactage à appliquer pour chaque élément d'application en fonction de la position dudit élément d'application et du motif géométrique global formé par les bords supérieurs de la pluralité de cloisons.

## Brève description des dessins

[Fig. 1] La figure 1 est une vue schématique d'une installation selon l'invention.
[Fig. 2] La figure 2 est une vue schématique en coupe de l'installation de la figure 1.
[Fig. 3] La figure 3 est une vue schématique des positions de l'élément d'application de la pression de l'installation de la figure 1 sur la surface de drapage.
[Fig. 4] La figure 4 est une vue schématique de la première position de l'élément d'application de la pression de l'installation de la figure 1.
[Fig. 5] La figure 5 est une vue schématique de la deuxième position de l'élément d'application de la pression de l'installation de la figure 1.
[Fig. 6] La figure 6 est une vue schématique de la troisième position de l'élément d'application de la pression de l'installation de la figure 1.
[Fig. 7] La figure 7 est une vue schématique en coupe d'un panneau réalisé selon le procédé de l'invention.

## Description des modes de réalisation

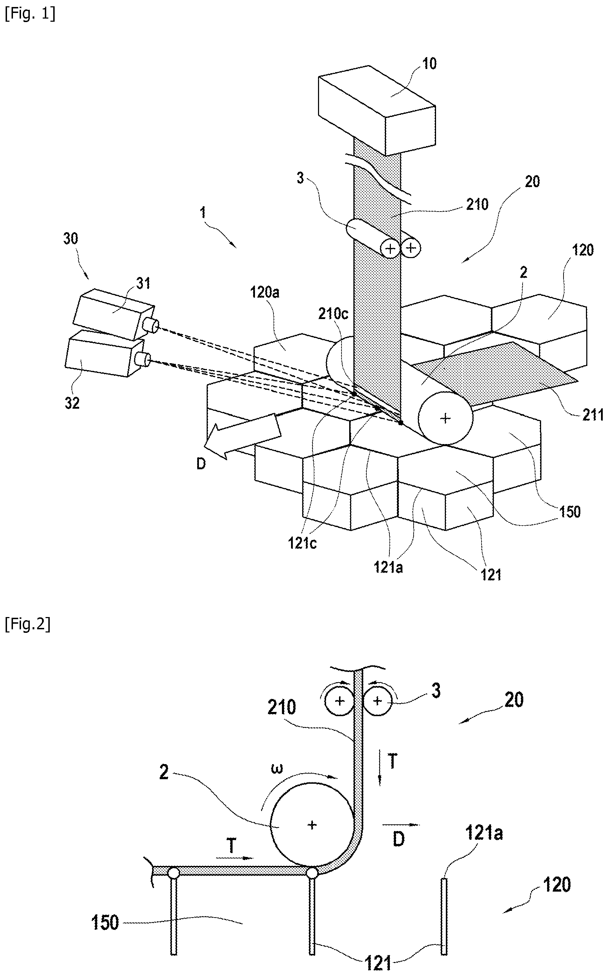

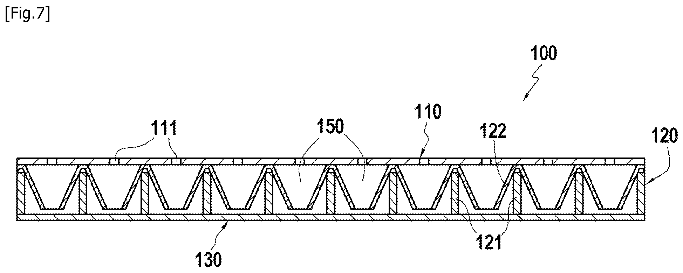

La figure 1 illustre de manière schématique et partielle une installation 1 selon l'invention pour le drapage de structures fibreuses 210 sur un corps multicellulaire 120 par placement automatique de fibres. Les structures fibreuses 210 imprégnées de matériau thermoplastique sont ainsi destinées à former une peau en matériau composite 110 ou 130 à matrice thermoplastique sur le corps multicellulaire 120, comme illustré sur la figure 7.

Le corps multicellulaire 120 comprend au moins une pluralité de cloisons 121 qui forment un réseau de nervures, définissant ainsi des cellules 150. Les bords supérieurs 121a des cloisons définissent une première surface de drapage 120a, qui est ainsi positionnée à une extrémité de chaque cellule 150 du corps multicellulaire 120.

Le corps multicellulaire peut se présenter sous la forme d'un empilement. Par exemple, le corps multicellulaire peut comprendre un empilement de plusieurs pluralités de cloisons définissant chacune un sous-corps cellulaire. Ces sous-corps cellulaires empilés peuvent eux-mêmes être séparés par des peaux.

En outre, les cellules 150 du corps multicellulaire 120 peuvent comprendre une ou plusieurs structures internes 122, par exemple des éléments acoustiques creux complexes de forme tronconique ou pyramidale, comme illustré sur la figure 7.

Dans l'exemple illustré sur les figures 1 à 7, le corps multicellulaire 120 présente des cellules 150 identiques de forme hexagonale, formant ainsi une structure régulière dite en « nid d'abeille ». On ne sort bien entendu pas du cadre de l'invention si les cellules du corps multicellulaire présentent une forme carrée, rectangulaire, ronde ou autre, voire quelconque. On ne sort pas non plus du cadre de l'invention si les cellules du corps multicellulaire présentent des formes variables et/ou irrégulières.

La fabrication d'un corps multicellulaire 120 est bien connue. Par exemple, le corps multicellulaire 120 peut être fabriqué de manière bien connue par fabrication additive polymère, composite ou métallique. Le corps multicellulaire 120 peut également être réalisé en polymère, en matériau composite, en matériau métallique ou en carton selon les méthodes de fabrication conventionnelles.

De préférence, le corps multicellulaire 120 est réalisé en matériau thermoplastique. De préférence, les bords supérieurs 121a du corps multicellulaire 120 appartenant à la surface de drapage 120a sont réalisés en matériau thermoplastique, le reste du corps multicellulaire 120 pouvant être réalisé dans un autre matériau. En effet, l'utilisation d'un matériau thermoplastique sur les bords supérieurs 121a du corps multicellulaire 120 destinés à être au contact de la peau 110 ou 130 permet de créer facilement et rapidement un lien fort avec les structures fibreuses 210 en matériau thermoplastique déposées. Ce mode préférentiel de liaison s'appuie sur un soudage thermoplastique/thermoplastique, qui permet de souder les structures fibreuses 210 aux bords supérieurs 121a des cloisons 121 facilement et sans apport de matière supplémentaire, grâce à une montée en température. Les caractéristiques des thermoplastiques lors de leur fusion ou de leur ramollissement, selon qu'ils soient semi-cristallins ou amorphes, permettent une interpénétration de leurs couches superficielles lors du drapage à haute température. La liaison ainsi formée entre les structures fibreuses 210 et les bords supérieurs 121a des cloisons 121 est donc mécaniquement forte et durable. En particulier, ce type de liaison thermoplastique/thermoplastique permet de réaliser des liaisons conformes aux standards aéronautiques.

Le corps multicellulaire 120 peut ainsi être réalisé de manière bien connue en matériau thermoplastique par injection ou par estampage. Le matériau thermoplastique peut être chargé avec des fibres courtes ou avec des fibres continues. Le matériau thermoplastique peut ne pas être chargé.

Le corps multicellulaire 120 peut également être réalisé de manière bien connue par injection-compression d'un matériau thermoplastique chargé ou non. L'injection-compression consiste à injecter la matière dans un moule entrouvert. Ainsi, même si la matière se fige, les canaux s'obstruent moins. Lorsque la matière est répartie dans l'ensemble du moule, celui-ci est complètement fermé par un effort de fermeture pour revenir à la bonne cote. Cela permet d'obtenir des épaisseurs pour les cloisons 121 des cellules 150 ou pour les parois des structures internes 122 plus fines qu'avec un procédé d'injection classique.

Le corps multicellulaire 120 peut également être réalisé de manière bien connue par injection avec pilotage de la température de l'outillage d'un matériau thermoplastique chargé ou non. L'injection avec pilotage de la température de l'outillage consiste à contrôler la température de l'outillage ou du moule au moyen d'un système d'asservissement de la température de l'outillage, par exemple avec un fluide caloporteur ou avec de l'air.

Les matériaux thermoplastiques qui peuvent être utilisés pour fabriquer le corps multicellulaire 120, et donc les cloisons 121, sont notamment les polyaryléthercétones (PAEK) tels que le polyétheréthercétone (PEEK) et le polyéthercétonecétone (PEKK), les polyétherimides (PEI), le polysulfure de phénylène (PPS) et le polysulfone (PSU).

L'installation selon l'invention comprend un dispositif d'alimentation 10 en structures fibreuses 210 imprégnées par un matériau thermoplastique. Les fibres des structures fibreuses 210 peuvent être des fibres céramiques ou en carbone. Les fibres céramiques peuvent être des fibres en matériau non-oxyde, comme le carbure de silicium (SiC), ou en matériau oxyde, comme l'alumine.

Les structures fibreuses 210 peuvent être sous la forme de mèches fibreuses ou de strates de tissu. On entend par « mèche » un ensemble de de fibres ou de filaments sensiblement parallèles entre eux et réunis en une bande non tissée. Les structures fibreuses peuvent être tissées ou non. De préférence, les structures fibreuses 210 sont des mèches de fibres unidirectionnelles continues pré-imprégnées.

Les structures fibreuses 210 sont imprégnées par un matériau thermoplastique, qui peut comporter des charges solides. Les structures fibreuses 210 peuvent également être imprégnées par un matériau thermoplastique ne comprenant pas de charges solides. Les structures fibreuses 210 peuvent être imprégnées uniquement par une phase organique constituée d'un matériau thermoplastique. Les structures fibreuses 210 peuvent présenter une teneur massique en polymère thermoplastique supérieure ou égale à 30%.

Le matériau thermoplastique imprégnant les structures fibreuses 210 peut être choisi parmi : les polyaryléthercétones (PAEK) tels que le polyétheréthercétone (PEEK) et le polyéthercétonecétone (PEKK), les polyétherimides (PEI), le polysulfure de phénylène (PPS) et le polysulfone (PSU).

Le matériau thermoplastique utilisé pour l'imprégnation des structures fibreuses 210 peut présenter une température de transition vitreuse supérieure ou égale à 50°C, et de préférence comprise entre 80°C et 180°C. Le matériau thermoplastique utilisé pour l'imprégnation des structures fibreuses 210 peut présenter une température de fusion supérieure ou égale à 80°C, et de préférence comprise entre 120°C et 500°C. La température de transition vitreuse et la température de fusion peuvent être calculées par calorimétrie différentielle à balayage.

L'imprégnation préalable des structures fibreuses 210 par le matériau thermoplastique peut être réalisée par toute technique conventionnelle, par exemple par trempage, par application au rouleau ou encore par pulvérisation.

Les structures fibreuses 210 imprégnées de matériau thermoplastique sont ensuite convoyées du dispositif d'alimentation 10 à un dispositif de dépôt 20 des structures fibreuses imprégnées 210. Le dispositif de dépôt 20 comprend au moins un élément d'application 2 de la pression situé du côté de la surface de drapage 120a du corps multicellulaire 120, c'est-à-dire du côté des bords supérieurs 121a des cloisons 121 du corps multicellulaire 120. Ce ou ces éléments d'application 2 de la pression appliquent chacun une pression de compactage, également appelée pression de drapage, sur le corps multicellulaire 120 afin de réaliser le dépôt des structures fibreuse imprégnées 210 sur la surface de drapage 120a définie par les bords supérieurs 121a des cloisons 121 du corps multicellulaire 120. L'élément d'application de la pression 2 peut prendre la forme d'un rouleau, comme illustré sur la figure 1, ou peut prendre la forme d'un sabot de compactage.

Lors de l'opération de drapage, le dispositif de dépôt 20 est mobile selon une direction de drapage D afin d'appliquer les structures fibreuses imprégnées 210 sur une première zone de la surface de drapage 120a du corps multicellulaire 120, de sorte à former une bande fibreuse imprégnée 211 sur au moins une partie des bords supérieurs 121a des cloisons 121. Une fois l'application réalisée sur ladite première zone, un élément de découpe (non représenté) coupe la bande fibreuse imprégnée 121. Après cette découpe, on obtient ainsi le dépôt d'une première bande fibreuse 121 imprégnée de matériau thermoplastique sur la première zone de la surface de drapage 120a. Le dispositif de dépôt 20 peut ensuite être déplacé afin de réaliser le dépôt des structures fibreuses imprégnées 210 sur une deuxième zone de la surface de drapage 120a, distincte de la première zone.

De préférence, on ne réalise qu'une seule couche de dépôt de structures fibreuses imprégnées 210 sur la surface de drapage 120a du corps multicellulaire 120. Ainsi, la matière nécessaire à la réalisation de la peau 110 ou 130 en matériau composite à matrice thermoplastique est intégralement déposée en un seul passage du dispositif de dépôt 20. Ce mode de dépôt permet d'obtenir une peau 110 ou 130 dans une matière présentant de bonnes caractéristiques microstructurales, la consolidation s'effectuant dans de bonnes conditions.

L'installation 1 selon l'invention comprend en outre un dispositif de chauffage localisé 30. Ce dispositif de chauffage localisé 30 comprend un ou plusieurs éléments 31 et 32 capable de chauffer des portions très réduites 210c des structures fibreuses 210 en cours de dépôt, ou des portions très réduites 121c des bords supérieurs 121a des cloisons 121 en cours de recouvrement par les structures fibreuses 210 déposées. Comme dans l'exemple illustré sur la figure 1, le dispositif de chauffage localisé 30 peut être un système de chauffage laser, qui permet une excellente précision de la zone chauffée. Ce système de chauffage laser peut comprendre des diodes laser, un laser YAG ou encore un laser à fibre.

Comme illustré sur la figure 1, un ou plusieurs premiers éléments de chauffage 31 peuvent être utilisés pour chauffer la portion 210c des structures fibreuses 210 sur le point d'être drapée. Ce ou ces premiers éléments de chauffage 31 assurent ainsi un chauffage continu et homogène des structures fibreuses 210 déposées. Par ailleurs, un ou plusieurs deuxièmes éléments de chauffage 32 peuvent être utilisés pour chauffer la portion 121c du ou des bords supérieurs 121a des cloisons 121 sur le point d'être mise au contact des structures fibreuses 210. Ce ou ces deuxièmes éléments de chauffage 32 assurent un chauffage très restreint des bords supérieurs 121a des cloisons 121, limitant les risques d'une déformation non souhaitée du corps multicellulaire 120, et en particulier les risques d'affaissement du corps multicellulaire 120 dus au passage du dispositif de dépôt 20. Les premiers et deuxièmes éléments de chauffage 31 et 32 peuvent être distincts, ou confondus au moins en partie.

Afin de limiter les risques d'affaissement de la peau 110 ou 130 dans les zones non supportées par les cloisons 121 du corps multicellulaire 120, on applique une tension T importante sur les structures fibreuses imprégnées 210 au moment du dépôt, comme illustré sur la figure 2. Cette tension T est appelée ici « tension de drapage ».

Cette tension de drapage T est suffisamment élevée pour éviter un affaissement des structures fibreuses 210 non supportées par les bords supérieurs 121a des cloisons 121, mais pas trop importante pour éviter de rompre la liaison entre lesdites structures fibreuses 210 et les bords supérieurs 121a des cloisons 121. Ainsi, la tension de drapage T applique une contrainte de cisaillement sur l'interface entre les structures fibreuses 210 et les bords supérieurs 121a des cloisons 121 comprise entre 50% et 80% de la contrainte de cisaillement maximale supportée par ladite interface. Cette contrainte de cisaillement maximale peut être caractérisée en réalisant un essai de type « single-lap shear stress » ou « double-lap shear stress » sur une interface thermoplastique ou thermodurcissable adaptée à cette caractérisation.

Cette tension de drapage T peut être réalisée selon divers moyens, pilotés en tension. Par exemple, la tension de drapage T peut être réalisée au moins en partie par le biais de galets tendeurs 3. Le pilotage desdits galets tendeurs 3 peut être effectué en réalisant un frein sélectif de la rotation, une motorisation de la rotation ou un décalage piloté en translation transverse des galets tendeurs.

La tension de drapage T peut également être réalisée au moins en partie en pilotant en rotation le ou les éléments d'application de la pression 2 décrits précédemment, avec une vitesse de rotation ω. Par exemple, le ou les rouleaux de dépôt 2 peuvent être pilotés en rotation pour générer une tension de drapage T importante, et ne sont donc plus en rotation libre. Le ou les éléments d'application de la pression 2 sont pilotés par le biais d'un frein sélectif de la rotation ou par une motorisation en rotation.

De préférence, les moyens utilisés pour réaliser la tension de drapage T sont pilotés en boucle fermée, afin d'assurer les valeurs de tension recherchées dans la majeure partie des fibres.

Afin de diminuer encore le risque d'affaissement de la peau 110 ou 130 drapée sur le corps multicellulaire 120, il est également possible de maîtriser la pression $P_a$, $P_b$, $P_c$ appliquée par le ou les éléments d'application de la pression 2 décrits précédemment sur la surface de drapage 210a du corps multicellulaire 120. Cette pression $P_a$, $P_b$, $P_c$ est appelée ici « pression de compactage ». La pression $P_a$, $P_b$, $P_c$ appliquée par le ou les éléments d'application de la pression 2 peut être contrôlée par exemple par le biais d'un vérin, en contrôlant le ou les éléments d'application de la pression 2 en translation.

Pour chaque point de dépôt 121c de structures fibreuses 210 sur un bord supérieur 121a du corps multicellulaire 120, la direction de la pression de compactage $P_a$, $P_b$, $P_c$ est donc perpendiculaire à la direction de la tension de drapage T.

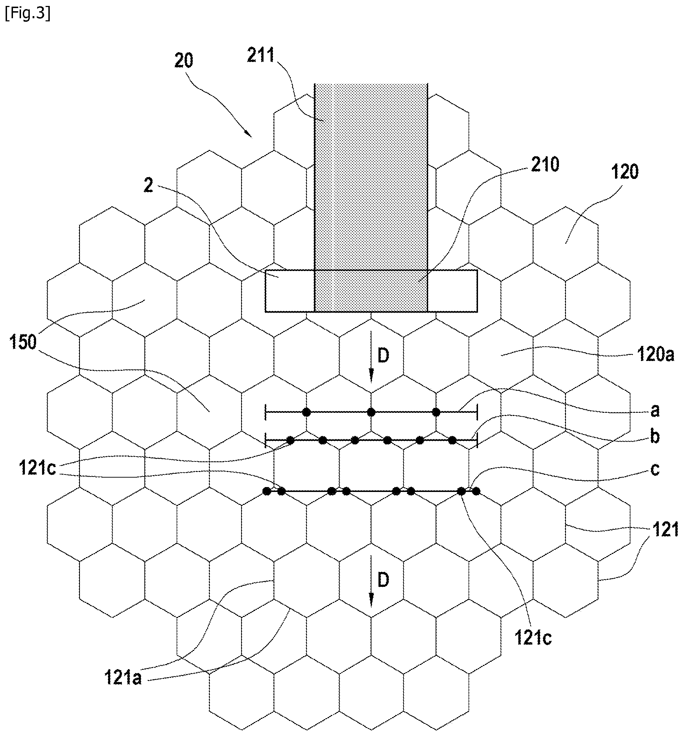

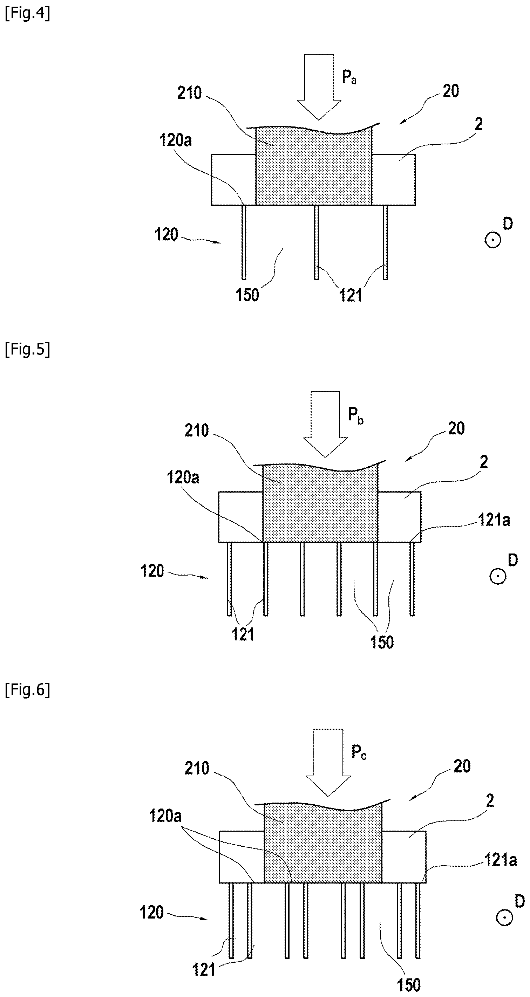

Comme la surface de drapage 120a n'est pas lisse mais discontinue, il est nécessaire d'adapter la pression de compactage $P_a$, $P_b$, $P_c$ exercée par chaque élément d'application de la pression 2 en fonction du nombre de bords 121a de cloison 121 présents sous ledit élément d'application de la pression 2. Comme illustré sur les figures 3 à 6 à titre d'exemple, l'élément d'application peut successivement passer au-dessus de trois cloisons 121 selon une première position a illustrée sur la figure 4, puis au-dessus de six cloisons 121 selon une deuxième position b illustrée sur la figure 5, puis au-dessus de huit cloisons 121 selon une troisième position c illustrée sur la figure 6. Ainsi, la première position a de l'élément d'application 2 nécessitera d'appliquer une première pression de compactage $P_a$, la deuxième position b de l'élément d'application 2 nécessitera d'appliquer une deuxième pression de compactage $P_b$ et la troisième position c de l'élément d'application 2 nécessitera d'appliquer une troisième pression de compactage $P_c$, de sorte que la deuxième pression de compactage $P_b$ soit supérieure à la première pression de compactage $P_a$

mais inférieure à la troisième pression de compactage $P_c$.

Le nombre de bords 121a de cloison 121 présents sous un élément d'application de la pression 2 peut être déterminé en temps réel à mesure que ledit élément d'application 2 se déplace sur la surface de drapage 120a, ou peut être prédéterminé à partir du motif géométrique global de la surface de drapage 120a, formé par les bords supérieurs 121a de la pluralité de cloisons 121.

La détermination en temps réel du nombre de cloisons 121 présentes sous l'élément d'application 2 peut être effectuée par un capteur ou un instrument spécifique, par exemple par un profilomètre.

On définit une pression de compactage de référence $P_{réf}$ qui correspond à la pression maximale exercée par l'élément d'application de la pression 2 qui est supportée par une cloison 121. Cette pression de compactage de référence $P_{réf}$ est obtenue à partir de la limite minimum de flambement d'une cloison 121 pour un effort local donné.

Ainsi, on choisit une pression de compactage $P_a$, $P_b$, $P_c$ appliquée par chaque élément d'application 2 comprise entre 60% à 85% de la pression de compactage de référence $P_{réf}$ multipliée par le nombre de cloisons 121 situées sous ledit élément d'application 2.

Dans le cadre de l'exemple des figures 3 à 6, on obtient ainsi les formules suivantes pour les première, deuxième et troisième pressions de compactage $P_a$, $P_b$ et $P_c$ :

$$0,6 \times P_{réf} \times 3 \leq P_a \leq 0,85 \times P_{réf} \times 3 \;;$$

$$0,6 \times P_{réf} \times 6 \leq P_b \leq 0,85 \times P_{réf} \times 6 \;;$$

$$0,6 \times P_{réf} \times 8 \leq P_c \leq 0,85 \times P_{réf} \times 8.$$

Cette méthode de détermination de la pression de compactage peut être adaptée dans le cas où le corps multicellulaire présente des cloisons de différents types, une pression de compactage de référence $P_{réf}$ différente étant utilisée pour chaque type de cloison.

Ainsi, il est possible de former une peau 110 ou 130 sur les bords supérieurs 121a du corps multicellulaire 120, par exemple en effectuant un traitement thermique sur les structures fibreuses déposées comme décrit précédemment pour former la matrice du matériau composite formant la peau 110 ou 130. Le procédé de l'invention peut être utilisé pour la fabrication de n'importe quel type de panneau multicellulaire 100 comprenant au moins une peau 100 ou 130 recouvrant les cellules 150. Toutefois, l'invention est particulièrement adaptée à la fabrication de panneaux d'atténuation acoustique. La présente invention peut notamment permettre la réalisation d'une ou plusieurs peaux 110, 130 d'un même panneau d'atténuation acoustique 100, y compris une peau acoustique d'ouverture 110, une peau acoustique de fermeture 130 ou encore une peau acoustique intermédiaire située entre deux pluralités de cloisons d'un même panneau. Dans le cas d'une peau acoustique d'ouverture 110, il est nécessaire de réaliser des perforations 111 dans ladite peau pour permettre le passage des ondes sonores dans les cellules acoustiques 150 du panneau 100.

Le panneau 100 fabriqué selon le procédé de l'invention peut être utilisé dans le domaine aéronautique, et en particulier pour réaliser un panneau multicellulaire appartenant à un moteur aéronautique, à une nacelle ou à l'intérieur d'une cabine.

L'expression « compris(e) entre ... et ... » doit se comprendre comme incluant les bornes.

## Revendications

1.  Procédé de fabrication d'un panneau (100) comprenant une pluralité de cloisons (121) définissant des cellules (150) recouvertes par au moins une peau (110, 130) en matériau thermoplastique, la peau (110, 130) étant réalisée par drapage de structures fibreuses (210) imprégnées d'un matériau thermoplastique sur les bords supérieurs (121a) des cloisons (121) par placement automatique de fibres, les bords supérieurs (121a) des cloisons (121) et les structures fibreuses (210) étant solidarisés à l'aide d'un dispositif de chauffage localisé (30) au moment de leur mise en contact, le procédé étant **caractérisé en ce que** les structures fibreuses (210) sont drapées avec une tension de drapage (T) sur l'interface entre chaque bord (121a) de cloison (121) et la structure fibreuse (210) déposée appliquant une contrainte de cisaillement comprise entre 50% et 80% de la contrainte de cisaillement maximale avant rupture de ladite interface.

2.  Procédé selon la revendication 1, dans lequel la tension de drapage (T) est réalisée au moins en partie par des galets tendeurs (3) contrôlés en rotation.

3.  Procédé selon la revendication 1 ou 2, dans lequel la tension de drapage (T) est réalisée au moins en partie par un rouleau de dépôt (2) des structures fibreuses (210) contrôlé en rotation.

4.  Procédé selon l'une quelconque des revendications 1 à 3, dans lequel les structures fibreuses (210) sont drapées avec une pression de compactage ($P_a$, $P_b$, $P_c$) appliquée par un élément d'application de la pression (2) sur le ou les bords supérieurs (121a) des cloisons (121) à un instant donné correspondant à entre 60% et 85% de la pression maximale supportée par le bord supérieur (121a) d'une cloison (121) multipliée par le nombre de cloisons (121) recouvertes par ledit élément d'application (2) à l'instant donné.

5.  Procédé selon la revendication 4, dans lequel un capteur mesure le nombre de cloisons (121) recouvertes par l'élément d'application (2).

6.  Procédé selon la revendication 4 ou 5, dans lequel l'élément d'application (2) est contrôlé par un dispositif adaptant la pression de compactage ($P_a$, $P_b$, $P_c$) appliquée par l'élément d'application (2) selon la position (a, b, c) de l'élément d'application (2) et le motif géométrique global formé par les bords supérieurs (121a) de la pluralité de cloisons (121).

7.  Procédé selon l'une quelconque des revendications 1 à 6, dans lequel au moins les bords supérieurs (121a) des cloisons (121) sont réalisés en matériau thermoplastique.

8.  Système comprenant des structures fibreuses (210), une pluralité de cloisons (121) définissant des cellules (150) et une installation (1) pour le drapage des structures fibreuses (210) imprégnées d'un matériau thermoplastique sur les bords supérieurs (121a) de la pluralité de cloisons (121), l'installation (1) comprenant au moins :

    - un dispositif d'alimentation (10) en structures fibreuses (210) imprégnées par un matériau thermoplastique,
    - un dispositif de dépôt (20) des structures fibreuses (210) sur les bords supérieurs (121a) de la pluralité de cloisons (121),
    - un dispositif de chauffage localisé (30) configuré pour chauffer les portions (121c) des bords supérieurs (121a) des cloisons (121) et les portions (210c) des structures fibreuses (210) immédiatement avant leur mise en contact par le dispositif de dépôt (20),

    le système étant **caractérisé en ce que** le dispositif de dépôt (20) est configuré pour réaliser une tension de drapage (T) sur l'interface entre chaque bord (121a) de cloison (121) et la structure fibreuse (210) déposée appliquant une contrainte de cisaillement comprise entre 50% et 80% de la contrainte de cisaillement maximale avant rupture de ladite interface.

9.  Système selon la revendication 8, dans lequel le dispositif de dépôt (20) comprend au moins un élément d'application de la pression (2) contrôlé d'une part en rotation pour réaliser la tension de drapage (T), et contrôlé d'autre part en translation pour réaliser une pression de compactage ($P_a$, $P_b$, $P_c$) sur le ou les bords supérieurs (121a) des cloisons (121) à un instant donné correspondant à entre 60% et 85% de la pression maximale supportée par le bord supérieur d'une cloison multipliée par le nombre de cloisons (121) recouvertes par ledit élément d'application (2) à l'instant donné.

10. Système selon la revendication 9, dans lequel le ou les éléments d'application de la pression (2) sont contrôlés par un dispositif de contrôle déterminant la pression de compactage ($(P_a$, $P_b$, $P_c$) à appliquer pour chaque élément d'application (2) en fonction de la position (a, b, c) dudit élément d'application (2) et du motif géométrique global formé par les bords supérieurs (121a) de la pluralité de cloisons (121).

**Patentansprüche**

1. Verfahren zur Herstellung eines Paneels (100) umfassend mehrere Trennwände (121), die Zellen (150) definieren, die von zumindest einer Haut (110, 130) aus thermoplastischem Material bedeckt werden, wobei die Haut (110, 130) durch Drapierung von Faserstrukturen (210), die mit einem thermoplastischen Material vorimprägniert sind, über die oberen Ränder (121a) der Trennwände (121) durch automatische Platzierung von Fasern verwirklicht wird, wobei die oberen Ränder (121a) der Trennwände (121) und die Faserstrukturen (210) mithilfe einer Vorrichtung zur lokalen Erwärmung (30) im Augenblick ihrer Kontaktierung miteinander fest verbunden werden,
wobei das Verfahren **dadurch gekennzeichnet ist, dass** die Faserstrukturen (210) mit einer Drapierungsspannung (T) über die Schnittstelle zwischen jedem Rand (121a) der Trennwand (121) und der abgelegten Faserstruktur (210) drapiert werden, wobei eine Scherspannung zwischen 50 % und 80 % der maximalen Scherspannung vor Bruch der Schnittstelle ausgeübt wird.

2. Verfahren nach Anspruch 1, wobei die Drapierungsspannung (T) zumindest zum Teil durch in der Drehung gesteuerte Spannrollen (3) erzielt wird.

3. Verfahren nach Anspruch 1 oder 2, wobei die Drapierungsspannung (T) zumindest zum Teil durch eine in der Drehung gesteuerte Ablegerolle (2) für Faserstrukturen (210) erzielt wird.

4. Verfahren nach einem der Ansprüche 1 bis 3, wobei die Faserstrukturen (210) mit einem Verdichtungsdruck (Pa, Pb, Pc) drapiert werden, der von einem Druckausübungselement (2) auf den oder die oberen Ränder (121a) der Trennwände (121) zu einem gegebenen Zeitpunkt ausgeübt wird, entsprechend zwischen 60 % und 85 % des maximalen Drucks, welchem der obere Rand (121a) einer Trennwand (121) standhält, multipliziert mit der Anzahl der Trennwände (121), die zu dem gegebenen Zeitpunkt von dem Ausübungselement (2) bedeckt sind.

5. Verfahren nach Anspruch 4, wobei ein Sensor die Anzahl der Trennwände (121) misst, die von dem Ausübungselement (2) bedeckt sind.

6. Verfahren nach Anspruch 4 oder 5, wobei das Ausübungselement (2) von einer Vorrichtung gesteuert wird, die den Verdichtungsdruck (Pa, Pb, Pc), der von dem Druckausübungselement (2) ausgeübt wird, gemäß der Position (a, b, c) des Ausübungselements (2) und dem allgemeinen geometrischen Muster anpasst, das von den oberen Rändern (121a) der mehreren Trennwände (121) gebildet wird.

7. Verfahren nach einem der Ansprüche 1 bis 6, wobei zumindest die oberen Ränder (121a) der Trennwände (121) aus thermoplastischem Material verwirklicht sind.

8. System umfassend Faserstrukturen (210), mehrere Trennwände (121), die Zellen (150) definieren, und einen Aufbau (1) zur Drapierung der Faserstrukturen (210), die mit einem thermoplastischen Material imprägniert sind, über die oberen Ränder (121a) der mehreren Trennwände (121), wobei der Aufbau (1) zumindest umfasst:

   - eine Vorrichtung (10) zur Zuführung von Faserstrukturen (210), die mit einem thermoplastischen Material imprägniert sind,
   - eine Vorrichtung (20) zur Ablage von Faserstrukturen (210) auf den oberen Rändern (121a) der mehreren Trennwände (121),
   - eine Vorrichtung (30) zur lokalen Erwärmung zum Erwärmen der Abschnitte (121c) der oberen Ränder (121a) der Trennwände (121) und der Abschnitte (210c) der Faserstrukturen (210) unmittelbar vor ihrer Kontaktierung durch die Ablegevorrichtung (20),

   wobei das System **dadurch gekennzeichnet ist, dass** die Ablegevorrichtung 20) dazu ausgestaltet ist, eine Drapierungsspannung (T) über die Schnittstelle zwischen jedem Rand (121a) der Trennwand (121) und der abgelegten Faserstruktur (210) zu erzielen, indem eine Scherspannung zwischen 50 % und 80 % der maximalen Scherspannung vor Bruch der Schnittstelle ausgeübt wird.

9. System nach Anspruch 8, wobei die Ablegevorrichtung (20) zumindest ein Druckausübungselement (2) umfasst, das einerseits in der Drehung gesteuert wird, um die Drapierungsspannung (T) zu verwirklichen, und andererseits in der Verschiebung gesteuert wird, um einen Verdichtungsdruck (Pa, Pb, PC) über dem oder die oberen Ränder (121a) der Trennwände (121) zu einem gegebenen Zeitpunkt zu verwirklichen, entsprechend zwischen 60 % und 85 % des maximalen Drucks, welchem der obere Rand einer Trennwand standhält, multipliziert mit der Anzahl der Trennwände (121), die zu dem gegebenen Zeitpunkt von dem Ausübungselement (2) bedeckt sind.

10. System nach Anspruch 9, wobei das oder die Druckausübungselemente (2) durch eine Steuervorrichtung gesteuert werden, die den Verdichtungsdruck (Pa, Pb, Pc), der von jedem Ausübungselement (2) ausgeübt werden soll, in Abhängigkeit von der Position (a, b, c) des Ausübungselements (2) und von dem allgemeinen geometrischen Muster bestimmt, das von den oberen Rändern (121a) der mehreren Trennwände (121) gebildet wird.

**Claims**

1. A method for manufacturing a panel (100) comprising a plurality of partitions (121) defining cells (150) covered by at least one skin (110, 130) of thermoplastic material, the skin (110, 130) being formed by draping fibrous structures (210) impregnated with a thermoplastic material on the upper edges (121a) of the partitions (121) by automatic placement of fibers, the upper edges (121a) of the partitions (121) and the fibrous structures (210) being joined together with the aid of a localized heating device (30) at the moment they are placed in contact,
the method being **characterized in that** the fibrous structures (210) are draped with a draping tension (T) on the interface between each edge (121a) of a partition (121) and the deposited fibrous structure (210) applying a shear stress of between 50% and 80% of the maximum shear stress before rupture of said interface.

2. The method according to claim 1, wherein the draping tension (T) is produced at least in part by tensioners (3) controlled in rotation.

3. The method according to claim 1 or 2, wherein the draping tension (T) is produced at least in part by a roller (2) for depositing the fibrous structures (210) controlled in rotation.

4. The method according to any one of claims 1 to 3, wherein the fibrous structures (210) are draped with a compaction pressure ($P_a$, $P_b$, $P_c$) applied by a pressure application element (2) on the upper edge(s) (121a) of the partitions (121) at a given instant corresponding to between 60% and 85% of the maximum pressure supported by the upper edge (121a) of a partition (121) multiplied by the number of partitions (121) covered by said application element (2) at the given instant.

5. The method according to claim 4, wherein a sensor measures the number of partitions (121) covered by the application element (2).

6. The method according to claim 4 or 5, wherein the application element (2) is controlled by a device adapting the compaction pressure ($P_a$, $P_b$, $P_c$) applied by the application element (2) according to the position (a, b, c) of the application element (2) and the overall geometric pattern formed by the upper edges (121a) of the plurality of partitions (121).

7. The method according to any one of claims 1 to 6, wherein at least the upper edges (121a) of the partitions (121) are made of thermoplastic material.

8. A system comprising fibrous structures (210), a plurality of partitions (121) defining cells (150) and an installation (1) for draping fibrous structures (210) impregnated with a thermoplastic material on the upper edges (121a) of the plurality of partitions (121), the installation (1) comprising at least:

   - a device (10) for supply with fibrous structures (210) impregnated with a thermoplastic material,
   - a device (20) for depositing fibrous structures (210) on the upper edges (121a) of the plurality of partitions (121),
   - a localized heating device (30) configured to heat the portions (121c) of the upper edges (121a) of the partitions (121) and the portions (210c) of the fibrous structures (210) immediately before they are placed in contact by the deposition device (20), the system being **characterized in that** the deposition device (20) is configured to produce a draping tension (T) on the interface between each edge (121a) of a partition (121) and the deposited fibrous structure (210) applying a shear stress of between 50% and 80% of the maximum shear stress before rupture of said interface.

9. The system according to claim 8, wherein the deposition device (20) comprises at least one pressure application element (2) controlled on the one hand in rotation to achieve the draping tension (T), and on the other hand controlled in translation to achieve a compaction pressure ($P_a$, $P_b$, $P_c$) on the upper edge(s) (121a) of the partitions (121) at a given instant corresponding to between 60% and 85% of the maximum pressure supported by the upper edge of a partition multiplied by the number of partitions (121) covered by said application element (2) at the given instant.

**10.** The system according to claim 9, wherein the pressure application element(s) (2) are controlled by a control device determining the compaction pressure ($P_a$, $P_b$, $P_c$) to be applied for each application element (2) according to the position (a, b, c) of said application element (2) and the overall geometric pattern formed by the upper edges (121a) of the plurality of partitions (121).

[Fig. 1]

[Fig.2]

[Fig.3]

[Fig.4]

[Fig.5]

[Fig.6]

[Fig.7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5912442 A
- GB 2314526 A
- US 20180018952 A